# EUROPÄISCHE PATENTANMELDUNG

(11) **EP 0 550 774 A1**
(43) Veröffentlichungstag der Anmeldung: **14.07.1993**
(21) Anmeldenummer: 91119932.1
(22) Anmeldetag: 22.11.1991
(51) Int. Cl.: B60N 2/24

(54) **Gepolsterter Fahrgastsitz**

(71) Anmelder: Ignaz Vogel GmbH & Co KG, Fahrzeugsitze, D-76228 Karlsruhe (DE)
(72) Erfinder: Vogel, Ignaz, W-7500 Karlsruhe 41-Stu. (DE)
(74) Vertreter: Trappenberg, Hans

(57) **Zusammenfassung**

Die Polsterteile von Fahrgastsitzen werden nach heutiger Fertigungsart als komplettes Bauteil in schwieriger Polsterarbeit hergestellt und sind nur im Gesamten austauschbar.

Die Erfindung schlägt Polsterteile für derartige Fahrgastsitze vor, die aus drei voneinander lösbaren Teilen bestehen und durch die überzuziehende, lösbar an einer Kunststoffschale anzubringenden Stoffbahn zusammengehalten werden.

## Beschreibung

Die Erfindung betrifft einen gepolsterten Fahrgastsitz, gebildet aus einem auf einem Untergestell aufgebauten Sitzgestell, auf dem über jeweils eine Montageplatte ein Sitzkissen und eine gepolsterte Rückenlehne angebracht ist.

Derartige gepolsterte Fahrgastsitze werden als "Komfortsitze" in sehr großen Stückzahlen zur Bestuhlung von Personenbeförderungs-Fahrzeugen aller Art, insbesondere für Omnibusse, benötigt. Hierbei wird das Sitzgestell wie auch das Untergestell aus Stahl oder Leichtmetall-Konstruktionsteilen, insbesondere aus Hohlprofilen, zusammengefügt, auf das dann das Sitzpolster aufgebracht und die Rückenlehne angebracht wird. Zur Herstellung des Sitzpolsters wird nach heutigen Fertigungsmethoden ein Formkörper aus Kunststoff geschäumt und gleichzeitig eine Bodenplatte, im allgemeinen aus Sperrholz, mit eingeschäumt. Sodann wird in Polsterarbeit, wozu Fachkräfte benötigt werden, Polsterstoff über den Formkörper übergezogen und auf der Unterseite der Holzplatte, die gleichzeitig als Montageplatte dient, befestigt. In gleicher Art und Weise wird sodann auch die Rückenlehne hergestellt. Beide Teile werden danach am Sitzgestell angebracht und im allgemeinen dann auch noch seitlich von Kunststoffteilen zum Abdecken der Montageplatte beziehungsweise der Stoßnaht überfangen.

Nachteilig bei dieser Fertigungsart macht sich nicht nur die schwierige und damit teure, Fachkräfte benötigende Polsterarbeit bemerkbar, sondern auch die schwierige Auswechselbarkeit der Polsterteile. Gerade bei Personenbeförderungs-Fahrzeugen werden die Polsterteile sehr stark beansprucht und teilweise auch mutwillig zerstört. Auf jeden Fall müssen sie, sind sie auf irgendeine Art und Weise unansehnlich geworden, ausgetauscht werden. Hierzu müssen bei nach der heutigen Fertigungsmethode hergestellten Polsterteilen die gesamten Polsterteile ausgetauscht werden. Zwar könnten die in aller Regle nicht angegriffenen Kunststoffschaum-Formkörper mitsamt der Montageplatte wiederverwendet werden, jedoch unterbleibt fast stets eine solche Widerverwendung, da das Lösen des alten Stoffüberzugs sowie die sonstigen Widerherstellungsarbeiten höhere Kosten verursachen als die Herstellung eines neuen Polsterteils. Im Sinne des Umwelt schutzes sollte jedoch darauf hingewirkt werden, daß diese Teile wieder einer Verwendung zugeführt und nicht unter Verschmutzung der Umwelt vernichtet werden.

Damit ergibt sich als Aufgabe der Erfindung, einen gepolsterten Fahrgastsitz anzugeben, dessen Polsterteile auf wirtschaftliche Art und Weise, insbesondere ohne Einsatz von Fachkräften, herzustellen sind, deren Stoffbezug unschwer auszuwechseln ist und als, in diesem Falle wiederverwertbarer, Abfall lediglich die verschlissenen Stoffteile anfallen. Erreicht wird dies in erfindungsgemäßer Weise dadurch, daß die Montageplatten mit ihren Kanten nach unten/außen weisende Kunststoffschalen sind, auf die Polster-Kunststoffschaum-Formkörper aufgelegt sind, die mittels je einer an den Kanten der jeweiligen Kunststoffschale lösbar befestigten, dem jeweiligen Formkörper angepaßten Stoffbahn gehalten sind.

Nicht mehr also wie bisher werden komplette Polsterteile hergestellt, die auch komplett wieder auszutauschen sind, sondern diese Polsterteile bestehen nunmehr aus drei deutlich voneinander getrennten Teilen, einer Kunststoffschale, einem auf diese Kunststoffschale aufgelegten, geschäumten Formkörper sowie einer lösbar an der Kunststoffschale angebrachten Stoffbahn, die den Formkörper auf der Kunststoffschale hält. Dadurch werden bereits beim Herstellen des geschäumten Formkörpers sonst entstehende Kosten eingespart, da nunmehr das Einschäumen der Holz-Montageplatte, die ja auch in schwieriger Arbeit herzustellen ist, eingespart wird. Das Herstellen der Kunststoffschalen erfolgt auf entsprechenden Maschinen und kann vollkommen automatisiert werden, so daß auch dieses Teil preiswert herzustellen ist. Beim Fertigen der über die Formkörper überzuziehenden Stoffbahn ist zu beachten, daß zuvor die Polsterstoffe an ihren Kanten gesäumt werden mußten, um ein Einreißen der Stoffbahn zu vermeiden. Diese Säumarbeit entfällt, da nunmehr mit vergleichbarem Kostenaufwand die lösbare Befestigung angebracht wird. Zur Montage dieser drei Teile aneinander werden, was beonders kostensparend ins Gewicht fällt, keine Fachkräfte mehr benötigt, da lediglich noch das Formteil auf die Kunststoffschale aufzulegen und sodann die Stoffbahn in halbautomatischer Arbeit überzuziehen ist. Hierbei können an der Innenseite der Stoffbahn an deren Schnittkanten im Querschnitt hakenförmige thermoplastische Kunststoffprofilleisten angebracht sein, die unschwer in die Kanten der Kunststoffschalen einzuhängen sind. Nach einem besonderen Erfindungsmerkmal werden derartige hakenförmige Kunststoffprofilleisten, mit der Hakenöffnung zur Schnittkante weisend, an der Stoffbahn angebracht und entsprechend an der Innenseite der Kunststoffschalen anliegend in die Kanten der Kunststoffschalen eingehängt. Dadurch wird der Stoff über diese Kanten der Kunststoffschalen übergezogen, so daß sich ein sehr gut aussehender Abschluß des gesamten Teils ergibt. Zweckmäßigerweise werden diese aus Thermoplast bestehenden Kunststoffprofilleisten mit der Stoffbahn vernäht; selbstverständlich sind auch andere Befestigungsmöglichkeiten, beispielsweise Kleben, möglich.

Um die Montagearbeit zu erleichtern und einen sicheren Sitz der Formkörper auf den Kunststoffschalen zu bewirken, wird in den Kunststoffschalen eine Ausbuch tung zur Aufnahme der Formkörper vorgesehen. Kostenmindernd ist auch ein weiteres Erfindungsmerkmal, wonach die Kunststoffschalen der Polster-Außenform folgend geformt sind, so daß sich also über die gesamte Polsterfläche etwa gleichbleibende Polstereigenschaften ergeben. Um jedoch an den Stellen, an denen eine erhöhte Polster-Nachgiebigkeit gewünscht wird, eine bessere Polsterung zu erreichen, wird einem weiteren Erfindungsmerkmal nach die Kunststoffschale an diesen Stellen ausgebuchtet und der Polster-Kunststoffschaum-Formkörper im Positiv entsprechend geformt.

Auf der Zeichnung ist ein Ausführungsbeispiel des Erfindungsgegenstandes schematisch dargestellt, und zwar zeigen:
- Fig. 1: die prinzipielle Anordnung und
- Fig. 2: die Schnittkante einer Stoffbahn.

Auf einem Fahrgastsitz-Untergestell, in diesem Falle ein Vierkantrohr (1), ist eine Kunststoffschale (2) aufgelegt und befestigt, die dieses Vierkantrohr (1) umfängt so, daß die Kante (3) in der Blattebene nach unten weist. Eingehängt in diese Kante (3) ist ein hakenförmiges Kunststoffprofil (4), an dem eine Stoffbahn (5) angenäht ist. Eingelegt in die Kunststoffschale (2) ist ein Formkörper (6) aus Kunststoffschaum, der von der Stoffbahn (5) straff umspannt wird. Strichpunktiert eingezeichnet ist auch noch eine Blende (7), die die Einhängestelle der Profilleiste (4) abdeckt.

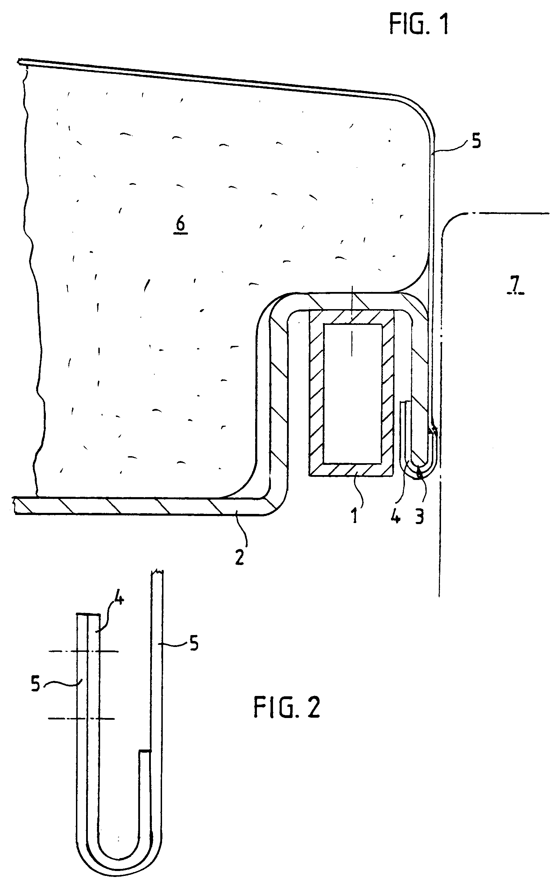

Die erfindungsgemäßen Polsterteile werden außerhalb der Sitzgestelle vorbereitet, also die Formkörper in die Kunststoffschalen (2) eingelegt und nach maschinellem Zusammendrücken der Formkörper die Stoffbahn übergezogen und in die Kanten der Kunststoffschale (2) eingehängt. Bei nachlassendem Druck kehren die Formkörper (6) wieder in ihre Ausgangslage zurück und spannen somit die sie überdeckende Stoffbahn (5), so daß sie sicher in den Kanten der Kunststoffschale (2) verankert sind. Diese so vorbereiteten Teile werden sodann in das Sitzgestell eingelegt und dort, wie dies in Fig. 1 schematisch dargestellt ist, befestigt.

Zum Auswechseln der Stoffbahn (5) braucht nun, ist der Formkörper (6) nicht beschädigt, lediglich wiederum Druck auf den Formkörper (6) ausgeübt werden, so daß die hakenförmige Profilleiste über die Kante (3) der Kunststoffschale übergezogen und somit die Stoffbahn gelöst werden kann. In umgekehrter Reihenfolge ist danach das Aufbringen einer neuen Stoffbahn, ohne daß irgendwelche weiteren Teile demontiert werden müssen, möglich.

## Patentansprüche

1. Gepolsterter Fahrgastsitz, gebildet aus einem auf einem Untergestell aufgebauten Sitzgestell, auf dem über jeweils eine Montageplatte ein Sitzkissen und eine gepolsterte Rückenlehne angebracht ist,
dadurch gekennzeichnet,
daß die Montageplatten mit ihren Kanten (3) nach unten (außen) weisende Kunststoffschalen (2) sind, auf die Polster-Kunststoffschaum-Formkörper (6) aufgelegt sind, die mittels je einer an den Kanten (3) der jeweiligen Kunststoffschale (2) lösbar befestigten, dem jeweiligen Formkörper (6) angepaßten Stoffbahn (5) gehalten sind.

2. Gepolsterter Fahrgastsitz nach Anspruch 1,
dadurch gekennzeichnet,
daß die Kunststoffschalen (2) eine Ausbuchtung zur Aufnahme und damit zum sicheren Halt der Polster-Kunststoffschaum-Formkörper (6) aufweisen.

3. Gepolsterter Fahrgastsitz nach Anspruch 1 oder 2,
dadurch gekennzeichnet,
daß die Kunststoffschalen (2) der Polster-Außenform folgend geformt sind.

4. Gepolsterter Fahrgastsitz nach Anspruch 1, 2 oder 3,
dadurch gekennzeichnet,
daß die Kunststoffschalen (2) an den Stellen, an denen eine erhöhte Polster-Nachgiebigkeit gewünscht wird, ausgebuchtet sind und diePolster-Kunststoffschaum-Formkörper (6) im Positiv entsprechend geformt sind.

5. Gepolsterter Fahrgastsitz nach Anspruch 1,
dadurch gekennzeichnet,
daß die Kunststoffschalen (2) aus einem ABS-Polymerisat sind.

6. Gepolsterter Fahrgastsitz nach Anspruch 1,
dadurch gekennzeichnet,
daß an der Innenseite der Stoffbahn (5) an deren Schnittkanten im Querschnitt hakenförmige, thermoplastische Kunststoffprofilleisten (4), mit der Hakenöffnung zur Schnittkante weisend, angebracht sind.

7. Gepolsterter Fahrgastsitz nach Anspruch 6,
dadurch gekennzeichnet,
daß die thermoplastischen Kunststoffleisten (4) mit der Stoffbahn (5) vernäht sind.
